(19) **Europäisches Patentamt**
**European Patent Office**
**Office européen des brevets**

(11) **EP 1 570 565 B1**

(12) **EUROPEAN PATENT SPECIFICATION**

(45) Date of publication and mention
of the grant of the patent:
**21.11.2007 Bulletin 2007/47**

(51) Int Cl.:
**H02K 7/116** (2006.01)   **F16H 13/08** (2006.01)
**F16H 13/04** (2006.01)   **F16H 13/06** (2006.01)
**F16H 13/14** (2006.01)

(21) Application number: **03796977.1**

(22) Date of filing: **11.12.2003**

(86) International application number:
**PCT/US2003/039509**

(87) International publication number:
**WO 2004/055958 (01.07.2004 Gazette 2004/27)**

(54) **INTEGRATED ELECTRIC MOTOR AND TRACTION DRIVE**

INTEGRIERTER ELEKTROMOTOR UND TRAKTIONSANTRIEB

MOTEUR ELECTRIQUE ET ENTRAINEMENT DE TRACTION INTEGRES

(84) Designated Contracting States:
**DE FR GB SE**

(30) Priority: **13.12.2002 US 433331 P**

(43) Date of publication of application:
**07.09.2005 Bulletin 2005/36**

(73) Proprietor: **THE TIMKEN COMPANY**
**Canton, Ohio 44706 (US)**

(72) Inventors:
• **AI, Xiaolan**
**Massillon, OH 44646 (US)**

• **BISHOP, Geoffrey**
**Hartville, OH 44632 (US)**

(74) Representative: **Marles, Alan David**
**Stevens, Hewlett & Perkins**
**1 St Augustine's Place**
**Bristol BS1 4UD (GB)**

(56) References cited:
**EP-A- 1 091 144**     **US-A- 3 380 312**
**US-A- 3 945 270**     **US-A- 4 481 842**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

Technical Field

Electric motors are one of the most widely used machines. The applications range from automobiles to earth movers, from aerospace to marine machinery, from home appliances to medical equipment.

Background Art

Recently, there have been increasing demands for motors with greater power density. For the purposes of this application, power density can be defined as the amount of power delivered either per unit weight or per unit volume, expressed respectively as W/kg or W/liter. One way to increase power density is to elevate the speed of a motor. As the speed of a motor increases, so does its overall power. As a result, there is a trend in machine designs toward using smaller electric motors operating at higher speeds. In some applications, this results in the speed of the motor being higher than the required speed of the driven member. Therefore, it is often deemed necessary to include a speed reduction unit between the motor and the driven member to reduce the speed of the motor to the required speed of the driven member. Although this results in an overall higher power density, the speed reduction unit still limits power density because of the additional weight and volume.

One solution to this is a so-called gear-head motor where a gear reduction unit is integrated with an electric motor. There are many types of gear-head motors including "precision" gear-head motors, which are capable of running at higher speeds and generally are much more expensive than "regular" gear head motors. However, even with precision-made gear heads, gear-head motors are often limited to operating speeds of 5,000 to 6,000 rpm. This has, to a large degree, prevented the gear-head motors from achieving their ultimate power-density potentials.

Recent developments in traction drives have demonstrated that a well-built traction drive can operate at higher speeds up to and exceeding 10,000 rpm and cost much less than gear-head drives. Thus, integrating a traction drive with an electric motor can increase the system power-density potential and thus extend the scope of application of electric motors. Document EP 1 091 144 describes a geared motor with a flanged planetary roller unit, where the rollers have defined positions.

Summary of the Invention

The invention is precisely defined in device claim 1.

Briefly stated, the invention is a motor supplying power at a high angular velocity integrated with a traction drive for receiving the power at a high angular velocity and delivering the power at a lesser angular velocity. The motor comprises a stator, a rotor that revolves in the stator at a high angular velocity, and a sun roller with a first raceway affixed to the rotor. The traction drive comprises a carrier, an outer ring member with an output shaft and a fourth raceway eccentric to the first raceway of the sun roller, and a loading planetary roller supported by the carrier with a third raceway. The third raceway engages with the first raceway of the sun roller and the fourth raceway of the outer ring in a convergent wedge formed by the first and fourth raceways for transferring power between the sun roller and the outer ring. The output shaft of the outer ring delivers power at a lesser angular velocity.

Brief Description of Drawings

In the accompanying drawings which form part of the specification:

FIG. 1 is an exploded perspective view showing the front of an embodiment of the invention.
FIG. 2 is an exploded perspective view showing the back of the embodiment.
FIG. 3 is a cross-sectional view of the embodiment.
FIG. 4 is a cross-sectional view of the motor.
FIG. 5 is a diagram showing forces at the raceways and at a support shaft of the embodiment.

Corresponding reference characters indicate corresponding parts throughout the several views of the drawings.

Best Mode for Carrying Out the Invention

The following detailed description illustrates the invention by way of example and not by way of limitation. The description clearly enables one skilled in the art to make and use the invention, describes several embodiments, adaptations, variations, alternatives, and uses of the invention, including what is presently believed to be the best mode of carrying out the invention.

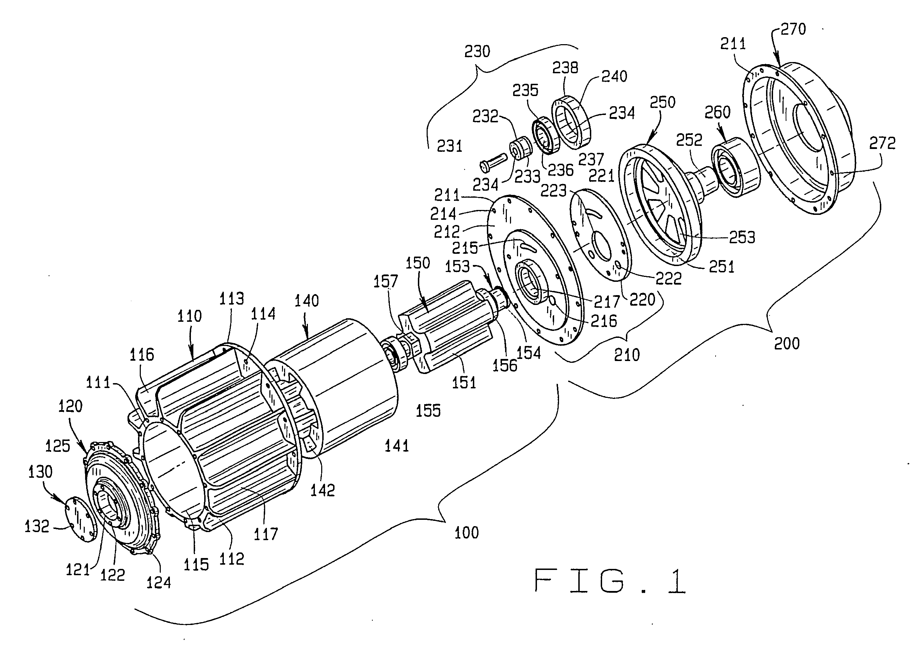

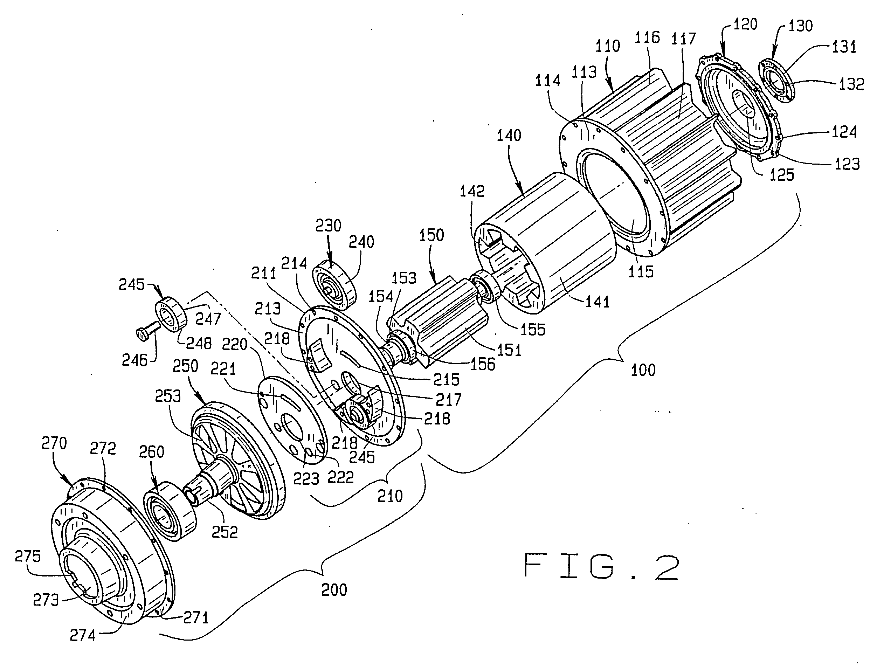

As shown in FIGS. 1 and 2, an embodiment of an integrated electric motor and traction drive 1 comprises an electric motor 100 and a traction drive 200. As used in this specification, "integrated" is defined as "combining multiple parts to form a single unit."

As shown in FIGS. 1-3, the electric motor 100 comprises a motor housing 110, a motor cover 120, a bearing cup plate 130, a stator 140, a rotor 150, and a sun roller 153. The motor housing 110 is a hollow cylinder defining a front face 111 with holes 112 for attaching to the motor cover 120, a back face 113 with holes 114 for attaching to the speed reducer 200, an inner surface 115 for affixing to the stator 140, and cooling fins 116 extending from an outer surface 117 to aid with the dispersal of heat produced during operation. The motor cover 120 is a disk with a raised concentric annulus defining a front face 121 with holes 122 for attaching to the bearing cup plate 130, a back face 123 with holes 124 for attaching to the front face 111 and respective holes 112 of the motor housing 110, and a first bore 125 for supporting the sun roller 153 via a bearing 155. The bearing cup plate 130 is a disk defining a back face 131 with holes 132 for attaching to the front face 121 and respective holes 122 of the motor cover 120. The stator 140 is a hollow cylinder with an outer surface 141 for affixing to the inner surface 115 of the motor housing 110 and internal poles 142 that are energized by electrical power to form magnetic poles for engaging the rotor 150. The rotor 150 is a hollow cylinder defining a second bore for affixing to the sun roller 153 and external male poles 152 for engaging the internal female poles 142 of the stator 140. The sun roller 153 is a shaft defining a first raceway 154 for engaging with the traction drive 200.

As well known to those skilled in the art, electric connections are provided to supply electric power to and from the windings of the internal poles 142 of the stator 140. For easier viewing, the windings are not shown in the drawings. While the embodiment in FIGS. 1-3 discloses a typical switched reluctance motor, other types of motors may be used such as, brushless motors, DC motors, and AC induction motors. While the embodiment in FIGS. 1-3 discloses a rotor 150 that is formed by laminated plates, other types of rotors may be used.

As shown in FIGS. 1-3, the traction drive 200 comprises a carrier 210, a loading planetary roller 230, supporting planetary rollers 245, an outer ring member 250, a double row bearing 260, and a traction drive housing 270. The carrier 210 comprises a base plate 211 and a cover plate 220. The base plate 211 is a disk with a raised concentric annulus defining a front face 212, a back face 213, holes 214 for attaching to the motor housing 110 and the traction drive housing 270, an obround pinhole 215 for supporting the loading planetary roller 230, pinholes 216 for supporting the supporting planetary rollers 245, a third bore 217 for supporting the sun roller 153, and arcuately shaped wedges on the back face 213, hereby referred to as islands 218. The islands 218 act as spacers between the base plate 211 and cover plate 220 defining cavities for receiving supporting planetary rollers 245 and the loading planetary roller 230. The cover plate 220 is a disk defining an obround pinhole 221 for supporting the loading planetary roller 230, pin holes 222 for supporting the supporting planetary rollers 245, and a through hole 223 for hosting the sun roller 153.

The supporting planetary rollers 245 comprise pin shafts 246 and bearings 247. The bearings 247 define second raceways 248 for engaging with the first raceway 154 of the sun roller 153. The bearings 247 affix to the pin shafts 246 so that the second raceways 248 rotates freely. The pin shafts 246 insert into the pinholes 216 of the base plate 211 and the pinholes 222 of the cover plate 220 so that the supporting planetary rollers 245 reside within the cavities defined by the islands 218.

The loading planetary roller 230 comprises a pin shaft 231, an elastic insert 232, a support bearing 235 and a roller 238. The elastic insert 232 is circularly shaped with an outer surface 233 and a center hole 234. The support bearing 235 is a circular anti-friction bearing, such as a ball bearing, with an inner race 236 and an outer race 237. The roller 238 is also circularly shaped with an inner surface 239 and a third raceway 240. When assembled, the support bearing 235 affixes to the elastic insert 232 with its inner race 236 fitted tightly over the outer surface 233 of the insert 232. The roller 238 is fitted to the support bearing 235 with an interference fit between its inner surface 239 and the outer race 237 of the support bearing 235 so that the roller 238 can rotate freely. Next, the elastic insert 232 is affixed to the pin shaft 231 by inserting the pin shaft 231 through the center hole 234 of the elastic insert 232. The pin shaft 231 is inserted into the pinhole 215 of the base plate 211 and the pinhole 221 of the cover plate 220 so that the third raceway 240 engages the first raceway 154 of the sun roller 153 and a fourth raceway 251 of the outer ring 250. The obround shape of the pinholes 215 and 221 allow the pin shaft 231 to slide back and forth slightly. During operation, this allows the loading roller 238 to automatically shift to an effective position for the third raceway 240 of the loading roller 238 to engage in a convergent wedge between the first raceway 154 of the sun roller 153 and a fourth raceway 251 of the outer ring 250 allowing power to be transferred between the sun roller 153 and the outer ring 250. While the pinshaft 231 shown in FIGS. 1-3 is shown to be supported by pinholes 215 and 221, it is also possible to have the pinshaft 231 supported by the carrier 210 through springs or elastomers.

The outer ring member 250 is an annular ring defining the fourth raceway 251 eccentric to the first raceway 154 of the sun roller 153 for engaging the third raceway 240 of the loading planetary roller 230 and the second raceways 248 of the supporting planetary rollers 245, an output shaft 252 for transferring power, and spokes 253 connecting the fourth raceway 251 and output shaft 252 to accommodate any possible misalignment between the fourth raceway 251 and output shaft 252. The output shaft 252 is supported by a back-to-back arranged double-row bearing 260.

The traction drive housing 270 is a hollow cylinder with a raised concentric annulus defining a front face 271 with holes 272 for attaching to the base plate 211 and respective holes 214, a fourth bore 273 for receiving the double row bearing 260, and a back face 274 for external mounting.

To assemble the embodiment, the back face 131 of the bearing cup plate 130 is attached to the front face 121 of the motor cover 120 by aligning holes 132 with respective holes 122 and using appropriate mechanical means, such as bolts or rivets. Similarly, the back face 123 of the motor cover 120 is attached to the front face 111 of the motor housing 110 by aligning holes 124 with respective holes 112 and using appropriate mechanical means, such as bolts or rivets. The stator 140 is inserted in to the motor housing 110 so that the outer surface 141 of the stator 140 is affixed to the inner surface 115 of the motor housing 110.

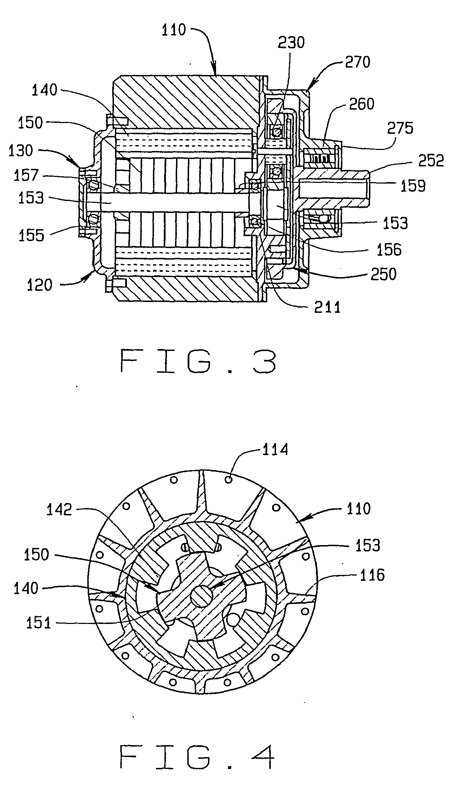

Bearing 156 is affixed to the sun roller 153 adjacent to the first raceway 154 for rotational support. A sleeve spacer 159 is affixed adjacent to the bearing 156. The rotor 150 is affixed to the sun roller 153 adjacent to the sleeve spacer 159. A nut 157 is affixed to the sun roller 153 to secure the rotor 150. Bearing 155 is affixed to the end of the sun roller 153 opposite the first raceway 154 for rotational support. As shown in FIGS. 3 and 4, the sun roller 153 and rotor 150 insert into the stator 140 so that the bearing 155 affixes to the first bore 125 of the motor cover 120 and the bearing 156 affixes to the third bore 217 of the base plate 211. In this position, the sun roller 153 and the rotor 150 rotate freely within the stator 140. In addition, the first raceway 154 extends past the base plate 211 so that the first raceway 154 rotates within the carrier 210.

To assemble the carrier 210, the cover plate 220 attaches to the islands 218 of the base plate 211. The pinshafts 246 of the supporting planetary rollers 245 are inserted into the pinholes 216 of the base plate 211 and the pinholes 222 of the cover plate 220 so that the second raceways 248 frictionally engage the first raceway 154 of the sun roller 153. The pinshaft 231 of the loading planetary roller 230 is inserted into the pinhole 215 of the base plate 211 and the pinhole 221 of the cover plate 220 so that the third raceway 240 frictionally engages the first raceway 154 of the sun roller 153.

The double row bearing 260 affixes to the fourth bore 273 of the traction drive housing 270. To further secure the double row bearing 260, a snap ring 275 may be used. The double row bearing 260 affixes to the output shaft 252 of the outer ring member 250 so that the outer ring member 250 can rotate freely. The front face 271 of the traction drive housing 270 attaches to the back face 213 of the base plate 211 by aligning holes 272 with respective holes 214 and using appropriate mechanical means, such as bolts or rivets. In this position, the fourth raceway 251 of the outer ring member 250 frictionally engages the third raceway 240 of the loading planetary roller 230 and the second raceways 248 of the supporting planetary rollers 245.

In operation, electric power is supplied to the windings of the internal female poles 142 causing the rotor 150 and sun roller 153 to rotate and transfer power at a high angular velocity. Power is transferred from the first raceway 154 of the sun roller 153 to the second raceways 248 of the supporting rollers 245 and the third raceway 240 of the loading planetary roller 230. Then, power is transferred from the second raceways 248 and the third raceway 240 to the fourth raceway 251 of the outer ring 250. Finally, power is transferred via the spokes 253 of the outer ring 250 to the output shaft 252 where it is output at a lesser angular velocity.

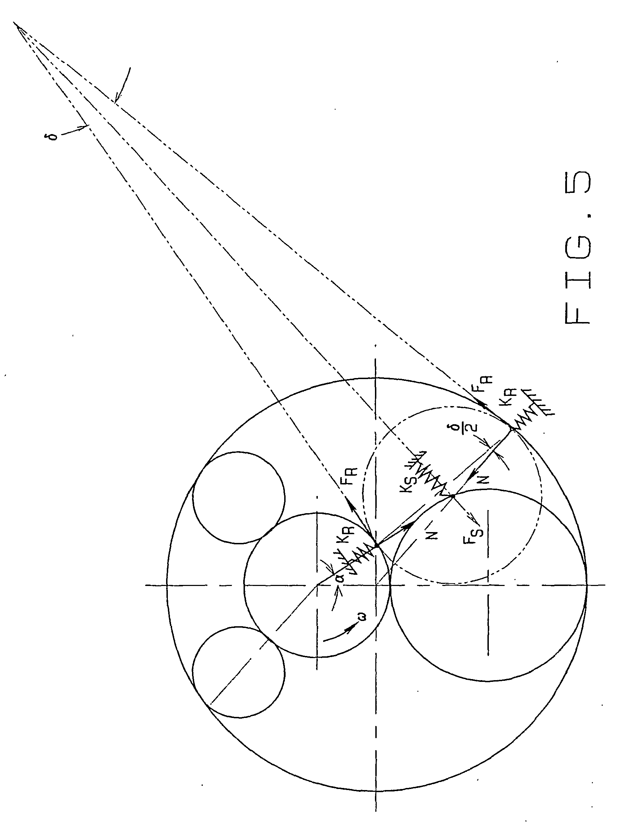

As the sun roller 153 rotates in FIG. 5, the friction force $F_R$ (traction) generated at the contact between the first raceway 154 and third raceway 240 of the loading planetary roller 230 tends to rotate the loading roller 230 and generate a reaction friction force $F_R$ at the contact between the third raceway 240 and the fourth raceway 251 of the outer ring 250. These friction forces pull the loading roller 230 into a converged wedge gap between the sun roller 153 and the outer ring 250 in either direction depending upon the rotation direction of the sun roller 153. The friction forces $F_R$ are balanced by normal contact forces N at the contacts between the first raceway 154 and third raceway 240 and between the fourth raceway 251 and third raceway 240, and by a supporting force $F_S$ provided from carrier 210 via pin shaft 231, elastic insert 232, and support bearing 235 to the loading roller 238.

The amount of normal force N generated in response to friction force $F_R$ is controlled by the supporting stiffness $K_s$ of the loading roller 230 assembly in relationship with the contact stiffness at the contacts along with the structural flexibility of outer ring 250 and the flexibility of other relevant components. Assume the lumped effective contact stiffness, representing Hertzian contact stiffness, structural flexibility of outer ring 250 and all other relevant components, be denoted as $K_R$. The following relationship generally holds true.

$$(1) \qquad \frac{K_S}{K_R} = \mu_o \sin\delta - 2\sin^2\left(\frac{\delta}{2}\right)$$

where

$K_S$ = effective support stiffness of loading roller

$K_R$ = effective contact stiffness between the loading roller and the sun roller and between the loading roller and the outer ring

$\mu_o$ = operating traction coefficient

$\delta$ = operating wedge angle (different from initial wedge angle)

To prevent the traction drive 200 from excessive slip at the contacts, the following inequality must be held.

$$(2) \qquad \frac{K_S}{K_R} = \mu_o \sin\delta - 2\sin^2\left(\frac{\delta}{2}\right) \le \mu_m \sin\delta - 2\sin^2\left(\frac{\delta}{2}\right)$$

where

$\mu_m$ = maximum available traction coefficient.

The second raceways 248 of the supporting rollers 245 are placed between and in contact with the first raceway 154 of the sun roller 153 and fourth raceways 251 of the outer ring 250. The supporting rollers 245 provide appropriate forces at the contacts between the outer ring 250 and the respective supporting rollers 245 to balance out the contact forces at the contact between the outer ring 250 and the loading roller 230. Likewise, the supporting rollers 245 provide appropriate forces at contacts between the sun roller 153 and the supporting rollers 245 to balance out the contact forces at the contact between the sun roller 153 and the loading roller 230. Thus, forces acting on the outer ring 250 and the sun roller 153 are internally self-balanced.

As can be appreciated, the frictional forces may also be generated at the contacts between the supporting rollers 245 and the outer ring 250 and between the supporting rollers 245 and the sun roller 153. These friction forces can also help to transmit torque and power between the sun roller 153 and outer ring 250.

For efficiency considerations, conventional traction drives have to operate with a wedge angle smaller but close to the so-called friction angle $\delta_f$ defined as:

$$(3) \qquad \delta_f = 2\,Arc\tan\mu$$

where $\mu$ is the friction coefficient at the contact.

This imposes an undesirable design constraint on the azimuth position of the loading roller 230 since the wedge angle $\delta$ is directly related to the azimuth position $\alpha$ of the loading roller 230 in relation to the eccentricity e of the sun roller's first raceway 153 with respect to the outer ring's fourth raceway 251.

As indicated by equation (2), by choosing appropriate ratio of effective supporting stiffness $K_S$ to effective contact stiffness $K_R$ it is possible to operate the traction drive 200 at a wide range of given operating wedge angle regardless of the friction coefficient, without sacrificing the drive's efficiency. That is to say, the traction drive 200 is capable of operating with operating traction coefficient close to the maximum available value even at a small wedge angle. This allows the loading roller 230 to be placed at or in vicinity to the azimuth position corresponding to the widest wedge gap. Consequently, the same loading roller 230 can be used as a bi-directional loading mechanism, substantially simplifying the design and construction of the traction drive 200.

Variations and modifications are possible within the scope of the appended claims.

**Claims**

1. An integrated motor and traction drive comprising:

   a motor (100) supplying power at a high angular velocity, the motor comprising a stator (140), a rotor (150) which revolves in the stator (140) at a high angular velocity, and a sun roller (153) affixed to the rotor (150) having a first raceway (154); and
   a traction drive (200) for receiving power at a high angular velocity and delivering the power at a lesser angular velocity, the traction drive (200) comprising a carrier (210), an outer ring member (250) having a fourth raceway (251) eccentric to the first raceway (154) of the sun roller (153) and an output shaft (252) for delivering power at a lesser angular velocity, and a loading planetary roller (230) supported by the carrier (210) having a third raceway (240) that engages with the first raceway (154) of the sun roller (153) and the fourth raceway (251) of the outer ring (250) forming a converged wedge for transferring power between the sun roller (153) and the outer ring (250);

wherein the loading planetary roller (230) rotates about a pin (231) with an elastic insert (232), the pin (231) being supported by the carrier (210) between arced wedges (218).

**2.** An integrated motor and traction drive according to claim 1, wherein the third raceway (240) engages with the first raceway (154) of the sun roller (153) and the fourth raceway (251) of the outer ring (250) to satisfy the equation

$$\frac{K_S}{K_R} = \mu_o \sin\delta - 2\sin^2\left(\frac{\delta}{2}\right) \leq \mu_m \sin\delta - 2\sin^2\left(\frac{\delta}{2}\right).$$

**3.** An integrated motor and traction drive according to claim 1, further comprising a supporting planetary roller (245) supported by the carrier (210) having a second raceway (248) that engages with the first raceway (154) and fourth raceway (251) to self-balance internal forces.

**4.** An integrated motor and traction drive according to claim 3, wherein the supporting planetary roller (245) comprises a pin shaft (246) supported by the carrier (210) and a bearing (247) affixed to the pin shaft (246).

**5.** An integrated motor and traction drive according to claim 1, further comprising a housing affixed to the stator (140) and the carrier (210) having a first bore (125) for supporting the sun roller (153) and a fourth bore (273) for supporting outer ring (250).

**6.** An integrated motor and traction drive according to claim 5, wherein the housing comprises:

a motor housing (110) attached to the carrier (210) and affixed to the stator (140), a motor cover (120) attached to the motor housing (110) having a first bore (125) for supporting the sun roller (153), a bearing cup plate (130) attached to the motor cover (120) to secure the sun roller(153); and
a traction drive housing (270) attached to the carrier (210) having a fourth bore (273) for supporting the outer ring (250).

**7.** An integrated motor and traction drive according to claim 1, wherein the loading planetary roller (230) comprises:

a support bearing (235) having an outer race (237) and an inner race (236), such that the outer race (233) of the support bearing (235) engages an inner surface (239) of the loading planetary roller (230) allowing the loading planetary roller (230) to rotate freely;
the elastic insert (232) having an outer surface (233) and a center hole (234), such that the outer surface (233) of the elastic insert (232) engages the inner race (236) of the support bearing (235); and
the pin (231) being engaged with the center hole (234) of the elastic insert (232), such that the loading planetary roller (230), support bearing (235), and elastic insert (232) are supported by the carrier (210) and the third raceway (240) of the loading planetary roller (230) engages the first raceway (154) of the sun roller (153) and fourth raceway (251) of the outer ring (250) forming a converged wedge for transferring power from the first raceway (154) to the fourth raceway (251).

**8.** An integrated motor and traction drive according to claim 1, wherein the carrier (210) comprises:

a base plate (211) having a pinhole (215) for supporting the loading planetary roller (230), a third bore (217) for supporting the sun roller (153), pinholes (222) for supporting the supporting planetary rollers (245), and arced wedges (218); and
a cover plate (220) affixed to the base plate (211) having a pinhole (215) for supporting the loading planetary roller (230) and a hole (223) for hosting the sun roller (153).

**EP 1 570 565 B1**

**Patentansprüche**

1. Integrierter Motor und Traktionsantrieb mit: einem Leistung mit einer hohen Winkelgeschwindigkeit zur Verfügung stellenden, einen Stator (140) aufweisenden Motor (100), einem sich mit hoher Winkelgeschwindigkeit innerhalb des Stators (140) drehenden Rotor (150) und einer an dem Rotor (150) befestigten, eine erste Lauffläche aufweisenden Sonnenrolle (153); und mit einem zur Aufnahme von Leistung bei hoher Winkelgeschwindigkeit und Abgabe von Leistung bei geringerer Winkelgeschwindigkeit bestimmten Traktionsantrieb (200), der einen Träger (210), ein Außenringorgan (250) mit einer exzentrisch zu der ersten Lauffläche (154) der Sonnenrolle (153) angeordneten vierten Lauffläche (251) und eine zur Abgabe von Leistung bei geringerer Winkelgeschwindigkeit bestimmten Abtriebswelle (252) aufweist, sowie eine an dem Träger (210) angeordnete, belastende Planetenrolle (230), die eine mit der ersten Lauffläche (154) der Sonnenrolle (153) und der vierten Lauffläche (251) des Außenringorgans (250) zusammenwirkende, einen konvergierenden Keil zur Übertragung von Leistung zwischen der Sonnenrolle (153) und dem Außenringorgan (250) bildende dritte Lauffläche (240) aufweist, wobei sich die belastende Planetenrolle (230) mit einem elastischen Einsatz (232) auf einem Stift (231) dreht, der zwischen gekrümmten Keilen (218) an dem Träger (210) befestigt ist.

2. Integrierter Motor und Traktionsantrieb nach Anspruch 1, bei dem die dritte Lauffläche (240) derart mit der ersten Lauffläche (154) der Sonnenrolle (153) und der vierten Lauffläche (251) des Außenringorgans (250) zusammenwirkt,

   dass die Gleichung $\dfrac{K_S}{K_R} = \mu_o \sin\delta - 2\sin^2\left(\dfrac{\delta}{2}\right) \leq \mu_m \sin\delta - 2\sin^2\left(\dfrac{\delta}{2}\right)$ erfüllt ist.

3. Integrierter Motor und Traktionsantrieb nach Anspruch 1, der weiterhin eine an dem Träger (210) angeordnete stützende Planetenrolle (245) mit einer zweiten Lauffläche (248) aufweist, die mit der ersten Lauffläche (154) und der vierten Lauffläche (251) zusammenwirkt, um innere Kräfte auszugleichen.

4. Integrierter Motor und Traktionsantrieb nach Anspruch 3, wobei die stützende Planetenrolle (245) eine an dem Träger (210) befestigte Stiftachse (246) und ein auf der Stiftachse (246) angeordnetes Lager (247) aufweist.

5. Integrierter Motor und Traktionsantrieb nach Anspruch 1, der weiterhin ein an dem Stator (140) befestigtes Gehäuse aufweist und bei dem der Träger (210) eine erste Bohrung (125) zur Lagerung der Sonnenrolle (153) und eine vierte Bohrung (273) zur Lagerung des Außenringorgans (250) aufweist.

6. Integrierter Motor und Traktionsantrieb nach Anspruch 5, bei dem das Gehäuse aufweist: ein an dem Träger (210) und dem Stator (140) befestigtes Motorgehäuse (110), einen an dem Motorgehäuse (110) befestigten Motordeckel (120) mit einer ersten Bohrung (125) zur Lagerung der Sonnenrolle (153), eine an dem Motordeckel (120) befestigte Lagerspiegelplatte (130) zur Sicherung der Sonnenrolle und ein an dem Träger (210) befestigtes Traktionsantriebsgehäuse (270) mit einer vierten Bohrung (273) zur Lagerung des Außenringorgans (250).

7. Integrierter Motor und Traktionsantrieb nach Anspruch 1, bei dem die belastende Planetenrolle aufweist: ein Traglager (235) mit einem äußeren Lagerring (237) und einem inneren Lagerring (236), so dass der äußere Lagerring (237) des Traglagers (235) an einer Innenfläche (239) der belastenden Planetenrolle (230) anliegt und der belastenden Planetenrolle (230) eine freie Rotation erlaubt; wobei der elastische Einsatz (232) eine Außenfläche (233) und eine zentrale Öffnung (234) aufweist, so dass die Außenfläche (233) des elastischen Einsatzes (232) an dem inneren Lagerring (236) des Traglagers (235) anliegt; und wobei der Stift (231) in die zentrale Öffnung (234) des elastischen Einsatzes (232) eingreift, so dass die belastende Planetenrolle (230), das Traglager (235) und der elastische Einsatz (232) von dem Träger (210) getragen werden und die dritte Lauffläche (240) der belastenden Planetenrolle (230) an der ersten Lauffläche (154) der Sonnenrolle (153) und der vierten Lauffläche (251) des Außenringorgans (250) einen konvergierten Keil zur Übertragung von Leistung von der ersten Lauffläche (154) auf die vierte Lauffläche (251) bildend anliegt.

8. Integrierter Motor und Traktionsantrieb nach Anspruch 1, bei dem der Träger (210) aufweist: eine Grundplatte (211) mit einem Stiftloch (215) zur Lagerung der belastenden Planetenrolle (230), einer dritten Bohrung (217) zur Lagerung der Sonnenrolle (153), Stiftlöchern (222) zur Lagerung der stützenden Planetenrollen (245) und gekrümmten Keilen (218); und eine an der Grundplatte (211) befestigte Deckplatte (220) mit einem Stiftloch (215) zur Lagerung der belastenden Planetenrolle (230) und einer Öffnung zur Aufnahme der Sonnenrolle (153).

7

**Revendications**

1. Moteur et entraînement de traction intégrés comprenant :

   un moteur (100) fournissant une puissance à une grande vitesse angulaire, le moteur comprenant un stator (140), un rotor (150) qui tourne dans le stator (140) à une grande vitesse angulaire, et un roulement planétaire (153) fixé au rotor (150) ayant un premier chemin de roulement (154) ; et un entraînement de traction (200) recevant la puissance à grande vitesse angulaire et délivrant la puissance à une vitesse angulaire moindre, l'entraînement de traction (200) comprenant un support (210), un élément de bague extérieure (250) ayant un quatrième chemin de roulement (251) excentrique au premier chemin de roulement (154) du roulement planétaire (153) et un arbre de sortie (252) pour délivrer la puissance à une vitesse angulaire moindre, et un roulement satellite de charge (230) porté par le support (210) ayant un troisième chemin de roulement (240) qui coopère avec le premier chemin de roulement (154) du roulement planétaire (153) et le quatrième chemin de roulement (251) de la bague extérieure (250) formant une pièce combinée pour transférer la puissance entre le roulement planétaire (153) et la bague extérieure (250) ;

   dans lesquels le roulement satellite de charge (230) tourne autour d'une broche (231) munie d'une pièce rapportée élastique (232), la broche (231) étant portée par le support (210) entre des pièces en arc de cercle (218).

2. Moteur et entraînement de traction intégrés selon la revendication 1, dans lesquels le troisième chemin de roulement (240) coopère avec le premier chemin de roulement (154) du roulement planétaire (153) et le quatrième chemin de roulement (251) de la bague extérieure (250) afin de satisfaire l'équation :

$$\frac{K_S}{K_R} = \mu_0 \sin \delta - 2 \sin^2\left(\frac{\delta}{2}\right) \leq \mu_m \sin \delta - 2 \sin^2\left(\frac{\delta}{2}\right).$$

3. Moteur et entraînement à traction intégrés selon la revendication 1, comprenant en outre un roulement satellite de maintien (245) porté par le support (210) ayant un deuxième chemin de roulement (248) qui coopère avec le premier chemin de roulement (154) et le quatrième chemin de roulement (251) pour équilibrer automatiquement les forces internes.

4. Moteur et entraînement de traction intégrés selon la revendication 3, dans lesquels le roulement satellite de maintien (245) comprend un axe goupille (246) porté par le support (210) et un palier (247) fixé à l'axe goupille (246).

5. Moteur et entraînement de traction intégrés selon la revendication 1, comprenant en outre un carter fixé au stator (140) et au support (210) ayant un premier alésage (125) pour porter le roulement satellite (153) et un quatrième alésage (273) pour porter la bague extérieure (250).

6. Moteur et entraînement de traction intégrés selon la revendication 5, dans lesquels le boîtier comprend :

   un carter moteur (110) fixé au support (210) et fixé au stator (140), un couvercle moteur (120) fixé au carter moteur (110) ayant un premier alésage (125) pour porter le roulement planétaire (153), une plaque en forme de coupelle de palier (130) attachée au couvercle moteur (120) afin de fixer le roulement satellite (153) ; et un carter d'entraînement de traction (270) attaché au support (210) ayant un quatrième alésage (273) pour porter la bague extérieure (250).

7. Moteur et entraînement de traction intégrés selon la revendication 1, dans lesquels le roulement satellite de charge (230) comprend :

   un palier support (235) ayant un chemin de roulement extérieur (237) et un chemin de roulement intérieur (236), de telle sorte que le chemin de roulement extérieur (233) du palier support (235) coopère avec une surface intérieure (239) du roulement satellite de charge (230) ce qui permet au roulement satellite de charge (230) de tourner librement ;
   la pièce rapportée élastique (232) ayant une surface extérieure (233) et un orifice central (234), de telle sorte que la surface extérieure (233) de la pièce rapportée élastique (232) coopère avec le chemin de roulement intérieur (236) du palier support (235) ; et

la broche (231) coopérant avec l'orifice central (234) de la pièce rapportée élastique (232), de telle sorte que le roulement satellite de charge (230), le palier support (235) et la pièce rapportée élastique (232) sont supportés par le support (210) et le troisième chemin de roulement (240) du roulement satellite de charge (230) coopère avec le premier chemin de roulement (154) du roulement planétaire (153) et le quatrième chemin de roulement (251) de la bague extérieure (250) formant une pièce combinée pour transférer la puissance du premier chemin de roulement (154) au quatrième chemin de roulement (251).

8. Moteur et entraînement de traction intégrés selon la revendication 1, dans lesquels le support (210) comprend:

une plaque de base (211) ayant un trou de goupille (215) permettant de porter le roulement satellite de charge (230), un troisième alésage (217) pour porter le roulement planétaire (153), des trous de goupille (222) pour porter des roulements satellites de charge (245), et des pièces en arc de cercle (218) ; et

une plaque de couvercle (220) fixée à la plaque de base (211) ayant un trou de goupille (215) pour porter le roulement satellite de charge (230) et un trou (223) pour loger le roulement planétaire (153).

FIG.1

EP 1 570 565 B1

FIG.2

FIG.3

FIG.4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1091144 A